# EUROPEAN PATENT SPECIFICATION

(11) **EP 1 991 742 B1**
(45) Date of publication and mention of the grant of the patent: **05.10.2011**
(21) Application number: 07712775.1
(22) Date of filing: 23.02.2007
(51) Int. Cl.: E03C 1/33

(54) **CLIP**
KLAMMER
ATTACHE

(30) Priority: 24.02.2006 GB 0603740
(43) Date of publication of application: 19.11.2008
(73) Proprietor: Davey, Glenn Stuart, Odsal Bradford BD6 1BG (GB)
(72) Inventor: Davey, Glenn Stuart, Odsal Bradford BD6 1BG (GB)
(74) Representative: Kohler, Janet Wendy
(86) International application number: PCT/GB2007/000650
(87) International publication number: WO 2007/096645

(56) References cited:
- DE-B- 1 247 579
- DE-U- 1 878 393
- US-A- 3 029 445
- US-A- 3 457 604
- US-A1- 2003 215 304

## Description

### Field of the Invention

The present invention relates to a clip for holding a first article, such as an under-slung sink, to a second article, such as a work surface, and a method relating thereto.

### Background to the Invention

When fitting an under-slung stainless steel sink to a granite work surface, a strong connection is required. However, the life of a sink is considerably shorter than that of a granite worktop and it is therefore desirable that the sink should be removed and replaced at a later date.

Granite is an extremely hard material which is very difficult to drill. Conventional clips supplied with stainless steel sinks require drilling of the work surface, and are thus very difficult to use with granite.

An alternative method of fixing an under-slung sink is to make a softwood frame, place the sink in position on the frame, place silicone sealant around the edge of the sink and fit the granite work surface over the sink. This has the problem that if the sink needs to be replaced, the granite work surface first needs to be lifted. This means that damage to the work top, surrounding tiles and fittings is likely. Replacing an under-slung sink is thus time consuming and costly and may result in a work area around the sink that is damaged.

A further alternative is to place silicone sealant around the top of the sink, and use a two-part resin to adhere the sink in place. Not only is it time consuming to use the two-part resin, but also problems occur with the resin failing and the sink becoming detached from the work surface. This is potentially unsafe as well as unsatisfactory for the user of the sink.

US 2003/0215304 discloses a fastening system comprising an "L" shaped clip that cooperates with a bridge or "T" toggle for holding an undermount sink to a granite, marble or stone counter. The "L" shape clip includes a tab that can be bent out of the clip using a screwdriver in order to give the first holding force to maintain the clip in place. This document provides basis for the precharacterising portion of independent claim 1 appended hereto.

An aim of the present invention is to address the problems that the prior art has described herein or elsewhere.

### Summary of the Invention

According to the present invention there is provided a clip and a method as set forth in the appended claims.

Other features of the invention will be apparent from the dependent claims, and the description which follows.

### Brief Description of the Drawings

For a better understanding of the invention, and to show how embodiments of the same may be carried into effect, reference will now be made, by way of example, to the accompanying diagrammatic drawings in which:
Figure 1 is a perspective view of a clip according to a first embodiment of the present invention;
Figure 2 is a view from below of a sink installed on a work surface by means of the clips of Figure 1;
Figure 3 is a cross sectional view from the side of a sink installed on a work surface by means of the clips of Figure 1;
Figure 4 is an enlarged cross sectional view of a clip arrangement of Figure 3;
Figure 5a shows a cross sectional view through the groove of Figure 4;
Figure 5b shows a cross sectional view through the groove of Figure 4 when an alternative clip is inserted;
Figure 6 is a view from below of a leg arrangement for supporting a work surface using the clip of Figure 1; and
Figure 7 is a perspective view of a temporary fencing arrangement using a further embodiment of the clip of the present invention.

### Description of the preferred embodiments

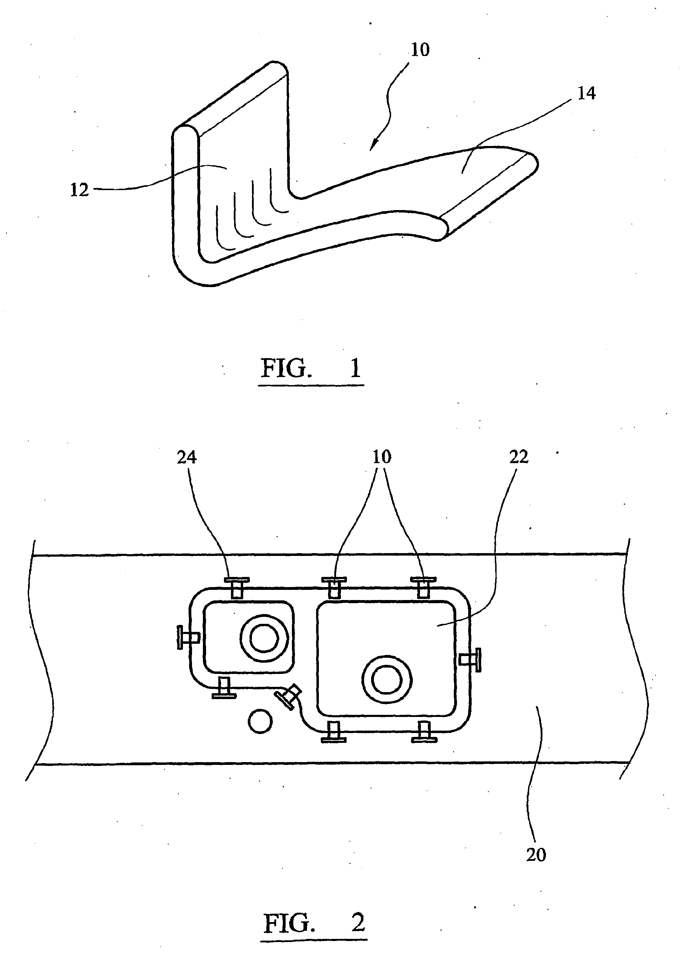

Figure 1 shows a clip 10 according to a first embodiment of the invention. The clip 10 comprises a first portion 12 and a second portion 14 extending substantially at right angles to the first portion 12. The clip 10 is designed to have a degree of resilience as will be described below. The clip 10 may be made from 3mm or 2mm thick spring steel.

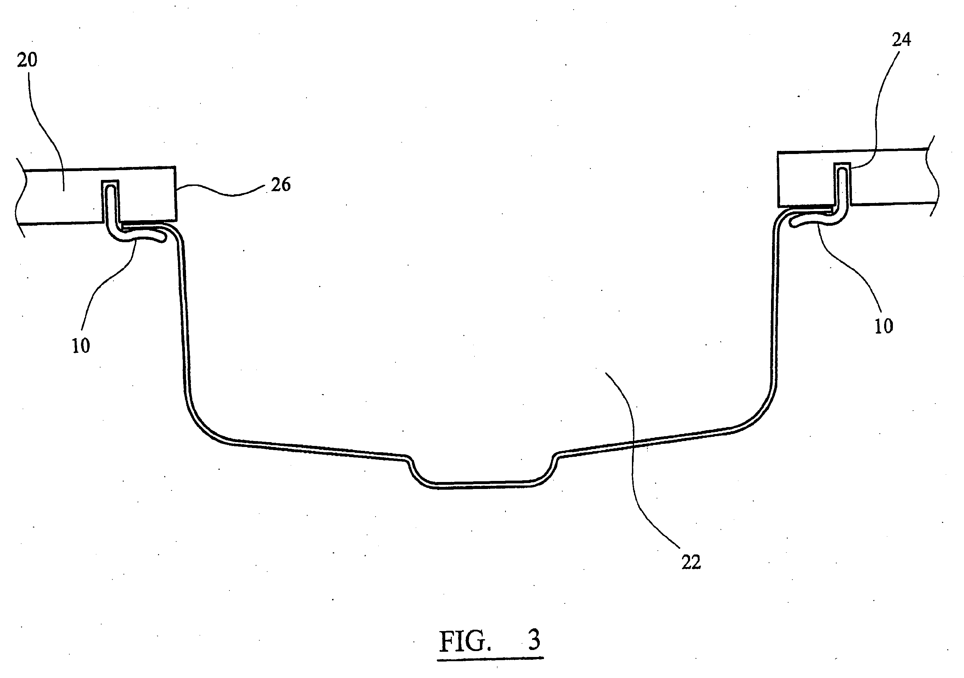

Figures 2 and 3 show a sink 22 which has been attached to the lower surface of a granite work surface 20 by means of clips 10. The granite work surface 20 has a number of grooves 24 machined into the lower surface, each groove 24 being parallel to the closest edge of the sink 22. Each groove 24 is 22mm deep and 4mm wide or 15mm deep and 2.5mm wide, according to the thickness of the clip 10.

In use, the sink is placed in position under an opening 26 in the granite work surface 20. The first portion 12 of each clip 10 is received in a respective groove 24. The relative size of the first portion 12 of the clip and the groove 24 are determined such that the clip 10 can be partially inserted in the groove 24 using finger pressure, and is held in position in the groove 24 by friction between the first portion 12 and the surface of the groove. In this position the clips 10 are able carry the weight of the sink 22 on their second portions 14. This enables a fitter to move the sink on the clips until the sink 22 is in the correct position. The clips 10 are also designed such that the first portions 12 can be fully inserted in the respective grooves 24 by tapping with a hammer. In the fully installed position each clip 10 is capable of carrying a greater amount weight placed on the second portion 14. Indeed, the shape of the clip 10 means that in the fully installed position, as the force on the second portion 14 increases, the clip 10 becomes more strongly wedged within the groove 24.

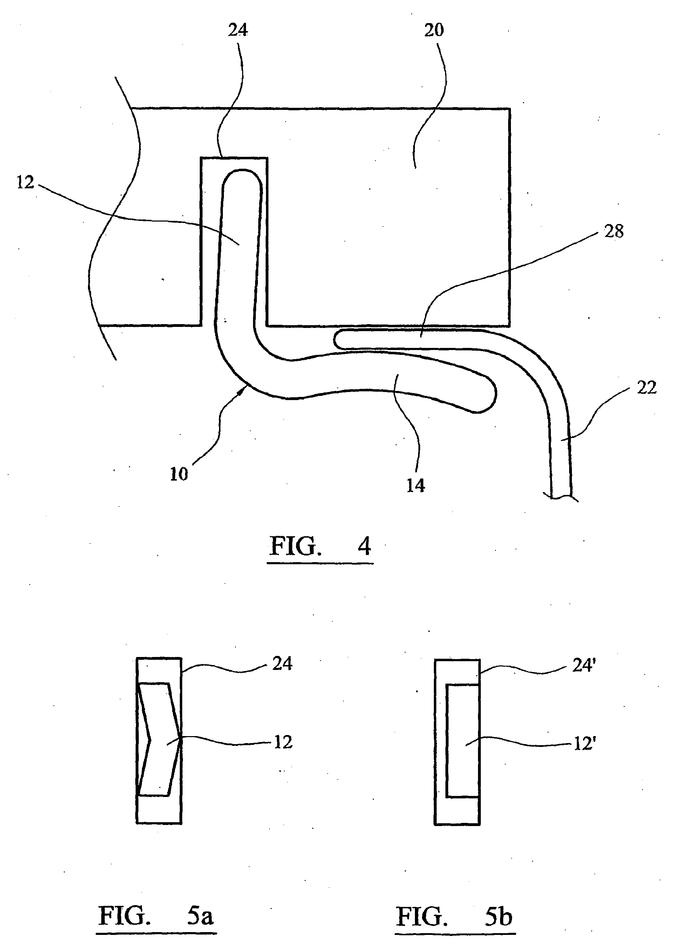

The first portion 12 of the clip 10 may have a shallow V shape as illustrated in Figure 1 and 5a. The V shape is resilient and provides three areas of strong contact with the inside of the groove. Alternatively, first portion 12' of the clip 10 may be flat, as illustrated in Figure 5b. The fact that the work surface 20 is made of granite means that the interior of the groove provides a very hard, high friction surface which is excellent for the clip to engage with.

An exemplary method of installing an under-slung sink 22 will now be described. The granite work surface 20 is placed with its lower side facing upwards. The sink 22 is placed in the desired position on the lower side of the granite work surface 20. A line is then drawn around the sink 22 with chalk and the sink 22 removed. At each of the points around the chalk line where it is desired to place a clip 10, a groove 24 is cut parallel to the chalk line and at 20mm from the chalk line and externally of the chalk line. Each groove 24 is cut using a 4" angle grinders. The granite work surface 20 is then located in its desired position.

When attaching the sink 22 to the granite work surface 20, silicone is first applied around a flange 28 of the sink 22 and the sink 22 lifted into place. The silicone provides a water tight seal between the sink 22 and the granite work surface 20. The first portion 12 of each of the clips 10 may then be located in a partially inserted position in respective grooves 24 by pressing with a finger or thumb. In the partially inserted position, the clips 10 are sufficiently secure within the grooves 24 to hold the sink 22 in place whilst allowing play between the sink 22 and the work surface 20. This allows the sink 22 to be accurately aligned and yet be supported by the clips 10. A hammer, such as a pin hammer, is then used to finally tap the.clips 10 to a fully installed position in the granite work surface 20. This secures the sink 22 firmly between the second portion 14 of the clip 10 and the work surface 20.

Once installed, the shape of the clip 10 is such that the more downwards pressure that is applied to the sink 22, and hence to the second portion 14 of the clip 10, the more securely the clip 10 is held in the respective groove 24. The limiting factor for failure of the sink 22 arrangement when under load is therefore likely to be failure of the sink 22 itself.

The simple design of the clip 10 of the present invention enables the fitter to install an under-slung sink 22 easily and quickly, 1 and also ensures its safeness and sturdiness. A standard sink 22 can be fitted and secured by the clips 10 in around 10 to 15 minutes.

The clips 10 not only secure the sink 22 to the granite work surface 20, but is capable of withstanding extreme pressure that may be encountered in retail and domestic environments, 1 such as the weight of an average person.

When it is desired to replace a sink 22, the clips 10 can be tapped sideways by means of a hammer to release the sink 22 from the work surface 20. The clips 10 may have to be tapped several times in opposing directions before they finally work loose. Thus the work surface 20 can remain in position, avoiding unnecessary damage.

Although the clip 10 has been described above for use in supporting a sink 22, it could be used in any application where one item needs to be held in close contact with another item. When a separating force is applied to the items the clip 10 serves to hold the items in even stronger contact.

For example, the clips 10 may be used to fit kitchen units to granite work surfaces. Again, the clips 10 are strong in use, but are easily removable, thus avoiding damage to both the units and the work surfaces.

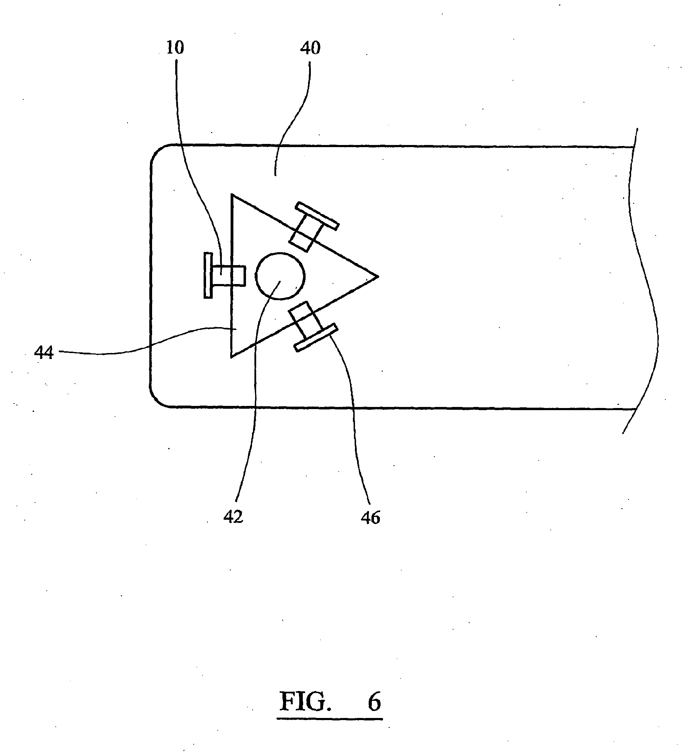

Figure 6 shows a work surface 40 in a kitchen that requires a support leg 42. The support leg 42 may be provided with a plate fitting 44. The plate fitting 44 is shown as triangular, but may be any suitable shape. Three grooves 46 are cut in the lower surface of the work surface 40, one at the centre of each side of the plate fitting 44, parallel to the side and at a predetermined distance from the side. Each groove 46 receives in use a clip 10 for securing the plate fitting 44 to the lower surface of the work surface 40 as described above.

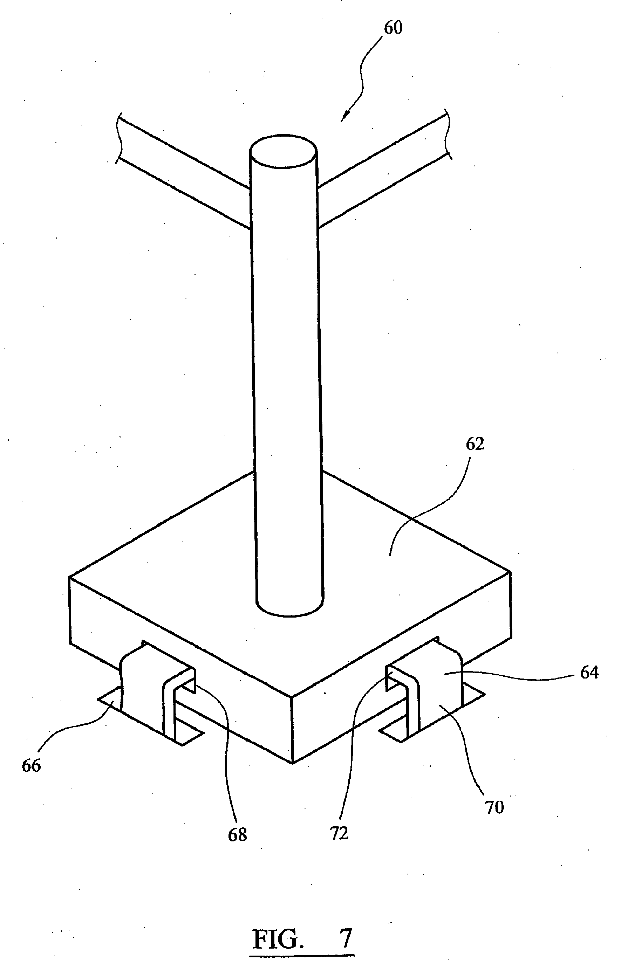

Figure 7 shows temporary safety fencing 60 of the type used to keep pedestrian and /or traffic away from road works. The fencing 60 includes a weighted base 62 to prevent the fencing 60 from falling over. However, this weighting is often not sufficient in high winds or if the fencing 60 is accidentally or deliberately pushed over. One or more larger scale versions 64 of the clip 10 described above may be used to secure the base 62 to a road surface. A first portion 70 of the clip 64 is inserted in a groove 66 cut in the road surface, whilst a second portion 72 of the clip 10 bears on an inner surface of a recess 68 in the base 62. If a force is applied to the base, tending to lift the base from the tarmac, the clip will apply a counter force to the inner surface of the recess 68.

The clip 10 functions most effectively in conjunction with grooves 24 cut in hard surfaces such as granite, but could be used with any other suitable surfaces.

Although a few preferred embodiments have been shown and described, it will be appreciated by those skilled in the art that various changes and modifications might be made without departing from the scope of the invention, as defined in the appended claims.

## Claims

1. A clip (10) for releasably clamping an article (22) to a support (20) that comprises a hard material having a surface with a groove (24) machined therein, wherein the clip (10) comprises an inserted portion (12) adapted for insertion into the groove (24) and a clamping portion (14) adapted for abutting against the article (22) in order to releasably clamp the article (22) between the clamping portion (14) and the surface of the support (20);
**characterised in that**:
the clip (10) is a single piece clip (10) being shaped such that, in use, when the clamping portion (14) abuts the article (22), the inserted portion (12) is angled across the groove such that a first location on the inserted portion (12) engages a near side of the groove (24) relative to the clamping portion (14) and a second location on the inserted portion (12) spaced from the first location and towards the surface of the support engages a far side of the groove (24) relative to the clamping portion (14).

2. The clip according to claim 1, wherein the clip is resilient.

3. The clip according to any preceding claim, wherein the inserted portion forms a shallow V shape.

4. A work surface clip comprising a clip as claimed in any of claims 1 to 3.

5. A granite work surface clip comprising a clip as claimed in any of claims 1 to 3.

6. A sink clip comprising a clip as claimed in any of claims 1 to 3.

7. A kitchen unit clip comprising a clip as claimed in any of claims 1 to 3.

8. A support leg clip comprising a clip as claimed in any of claims 1 to 3.

9. A sink arrangement comprising a sink and a plurality of sink clips, wherein the sink clips are as claimed in claim 1.

10. The sink arrangement according to claim 9, wherein the inserted portion (12) is held in the groove (24) by friction.

11. A method of attaching an article (22) to a support (20) comprising a hard material, the method comprising the steps of cutting at least one groove (24) in the support (20), locating the article (22) on the support, and partially inserting a single piece clip (10) into each groove (24), optionally adjusting the position of the article (22) with respect to the support (20), and then fully inserting each single piece clip (10) into the corresponding groove to firmly clamp the article (22) to the support (20), wherein the single piece clip is as claimed in any of claims 1-3.

12. The method of claim 11, wherein the step of cutting, by means of an angle grinder, the at least one groove (24) in the support comprises cutting the at least one groove (24) substantially parallel to an edge of the article (22).

13. A method of attaching an under-slung sink to a work surface using sink clips as claimed in claim 6, wherein the method comprises the steps according to the method as claimed in claims 11 or 12.

14. The method of claim 13, wherein the step of placing silicone around the edge of the sink is carried out before the step of locating the sink in position under an opening.

## Patentansprüche

1. Klammer (10) zum freigebbaren Festklemmen eines Artikels (22) an einer Stütze (20), die ein hartes Material mit einer Oberfläche umfasst, in die eine Nut (24) eingefräst ist, wobei die Klammer (10) einen eingeführten Abschnitt (12), der geeignet ist, in die Nut (24) eingeführt zu werden, und einen Klemmabschnitt (14), der geeignet ist, am Artikel (22) anzuschlagen, umfasst, um den Artikel (22) freigebbar zwischen dem Klemmabschnitt (14) und der Oberfläche der Stütze (20) festzuklemmen, **dadurch gekennzeichnet, dass**
die Klammer (10) eine einteilige Klammer (10) ist, die so gestaltet ist, dass der eingeführte Abschnitt (12) im Gebrauch, wenn der Klemmabschnitt (14) an den Artikel (22) anschlägt, so über die Nut hinweg abgewinkelt ist, dass eine erste Stelle am eingeführten Abschnitt (12) eine nahe Seite der Nut (24) bezüglich des Klemmabschnitts (14) in Eingriff nimmt und eine zweite Stelle am eingeführten Abschnitt (12), die von der ersten Stelle beabstandet ist und zur Oberfläche der Stütze hin liegt, eine ferne Seite der Nut (24) bezüglich des Klemmabschnitts (14) in Eingriff nimmt.

2. Klammer nach Anspruch 1, wobei die Klammer federnd ist.

3. Klammer nach einem der vorhergehenden Ansprüche, wobei der eingeführte Abschnitt eine flache V-Form bildet.

4. Arbeitsflächenklammer mit einer Klammer nach einem der Ansprüche 1 bis 3.

5. Granitarbeitsflächenklammer mit einer Klammer nach einem der Ansprüche 1 bis 3.

6. Spülbeckenklammer mit einer Klammer nach einem der Ansprüche 1 bis 3.

7. Küchenschrankklammer mit einer Klammer nach einem der Ansprüche 1 bis 3.

8. Stützschenkelklammer mit einer Klammer nach einem der Ansprüche 1 bis 3.

9. Spülbeckenanordnung mit einem Spülbecken und mehreren Spülbeckenklammern, wobei die Spülbeckenklammern gemäß Anspruch 1 sind.

10. Spülbeckenanordnung nach Anspruch 9, wobei der eingeführte Abschnitt (12) mittels Reibung in der Nut (24) gehalten ist.

11. Verfahren zum Anbringen eines Artikels (22) an einer Stütze (20), die ein hartes Material umfasst, wobei das Verfahren folgende Schritte umfasst: es wird mindestens eine Nut (24) in die Stütze (20) geschnitten, der Artikel (22) wird auf der Stütze positioniert und eine einteilige Klammer (10) wird teilweise in jede Nut (24) eingeführt, die Position des Artikels (22) in Bezug auf die Stütze (20) wird optional verstellt und jede einteilige Klammer (10) wird dann vollständig in die entsprechende Nut eingeführt, um den Artikel (22) fest an der Stütze (20) festzuklemmen, wobei die einteilige Klammer nach einem der Ansprüche 1 - 3 ist.

12. Verfahren nach Anspruch 11, wobei der Schritt des Schneidens der mindestens einen Nut (24) in die Stütze mittels eines Winkelschleifers das Schneiden der mindestens einen Nut (24) im Wesentlichen parallel zu einem Rand des Artikels (22) umfasst.

13. Verfahren des Anbringens eines unterbauten Spülbeckens an einer Arbeitsfläche unter Verwendung von Spülbeckenklammern nach Anspruch 6, wobei das Verfahren die Verfahrensschritte nach Anspruch 11 oder 12 umfasst.

14. Verfahren nach Anspruch 13, wobei der Schritt des Platzierens von Silikon um den Rand des Spülbeckens herum vor dem Schritt des Positionierens des Spülbeckens in seiner Position unter einer Öffnung ausgeführt wird.

## Revendications

1. Attache (10) permettant de fixer de façon amovible un article (22) à un support (20) qui comprend un matériau dur présentant une surface dans laquelle une encoche (24) a été usinée, ladite attache (10) comprenant une partie à insérer (12) adaptée à l'insertion dans l'encoche (24) et une partie de fixation (14) adaptée à être mise en butée contre l'article (22) afin de fixer de façon amovible l'article (22) entre la partie de fixation (14) et la surface du support (20) ;
**caractérisée en ce que** :
l'attache (10) est une attache fabriquée d'une seule pièce (10) formée de manière à ce que, lors de l'utilisation, quand la partie de fixation (14) est en butée contre l'article (22), la partie à insérer (12) soit inclinée à un angle au travers de l'encoche de manière à ce qu'un premier emplacement de la partie à insérer (12) soit mis en engagement avec le côté proche de l'encoche (24) par rapport à la partie de fixation (14) et qu'un deuxième emplacement de la partie à insérer (12) espacé du premier emplacement et vers la surface du support soit mis en engagement avec le côté distant de l'encoche (24) par rapport à la partie de fixation (14).

2. Attache selon la revendication 1, dans laquelle l'attache est flexible.

3. Attache selon l'une quelconque des revendications précédentes, dans laquelle la partie à insérer forme un V peu profond.

4. Attache pour plan de travail comprenant une attache selon l'une quelconque des revendications 1 à 3.

5. Attache pour plan de travail en granit comprenant une attache selon l'une quelconque des revendications 1 à 3.

6. Attache pour évier comprenant une attache selon l'une quelconque des revendications 1 à 3.

7. Attache pour bloc de cuisine comprenant une attache selon l'une quelconque des revendications 1 à 3.

8. Attache pour pied de support comprenant une attache selon l'une quelconque des revendications 1 à 3.

9. Agencement d'évier comprenant un évier et une pluralité d'attaches pour évier, dans lequel les attaches pour évier sont selon la revendication 1.

10. Agencement d'évier selon la revendication 9, dans lequel la partie à insérer (12) est retenue dans l'encoche (24) par friction.

11. Procédé permettant de fixer un article (22) à un support (20) comprenant un matériau dur, le procédé comprenant les étapes consistant à tailler au moins une encoche (24) dans le support (20), mettre en position l'article (22) sur le support et insérer partiellement une attache d'une seule pièce (10) dans chaque encoche (24), en ajustant optionnellement la position de l'article (22) par rapport au support (20) et ensuite à insérer entièrement chaque attache d'une seule pièce (10) dans l'encoche correspondante pour fixer fermement l'article (22) au support (20), dans lequel l'attache d'une seule pièce est selon l'une quelconque des revendications 1 à 3.

12. Procédé selon la revendication 11, dans lequel l'étape consistant à tailler, au moyen d'une meuleuse d'angle, l'au moins une encoche (24) dans le support comprend le taillage d'au moins une encoche (24) sensiblement parallèle à un bord de l'article (22).

13. Procédé de fixation d'un évier suspendu à un plan de travail en utilisant des attaches pour évier selon la revendication 6, dans lequel le procédé comprend les étapes énoncées dans les revendications 11 ou 12.

14. Procédé selon la revendication 13, dans lequel l'étape consistant à placer un cordon de silicone sur le pourtour du bord de l'évier est effectuée avant l'étape de positionnement de l'évier sous une ouverture.
